# EUROPEAN PATENT SPECIFICATION

(11) **EP 2 110 268 B1**
(45) Date of publication and mention of the grant of the patent: **17.11.2010**
(21) Application number: 09157903.7
(22) Date of filing: 15.04.2009
(51) Int. Cl.: B60C 15/032

(54) **Method and device for locking a tyre against a rim**
Verfahren und Vorrichtung zum Sichern eines Reifens auf einer Felge
Procédé et dispositif pour verrouiller un pneu dans un jante

(30) Priority: 15.04.2008 SE 0800852
(43) Date of publication of application: 21.10.2009
(73) Proprietor: Nitotec Sweden Aktiebolag, 163 46 Spånga (SE)
(72) Inventor: Christensen, Tom, 163 54 Spånga (SE); Lilja, Niklas, 196 34 Kungsängen (SE)
(74) Representative: Bergström, Johan Erik

(56) References cited:
- DE-A1- 2 438 633
- DE-A1- 2 806 325
- GB-A- 1 476 506
- JP-A- 60 226 304
- US-A- 3 791 433
- US-A- 4 216 809

## Description

### TECHNICAL AREA

The present invention relates to a locking element intended to be attached to a rim inside a tyre, whereby the rim comprises two flanges on either side of a base and whereby the flanges surround the tyre edges. The locking element is adjustable between a locking position and a free position, whereby it is intended to extend around the rim and lock the tyre against the rim flanges in its locking position.

### TECHNICAL BACKGROUND

During for example motor cross it is sometimes desirable to have a lower pressure in the tyres than what is normal for driving on roads. This puts other demands on rims and tyres. During low pressures the tyre becomes more sensitive for hits and other external impacts. On the one hand the low pressure means that the tyre is less attached to the rim, because normally it is the air pressure that presses the tyre beads against the rim flanges. Moreover the low pressure leads to that the tyre may be squeezed and sometimes punctured between the rim flange and the surface. A punctured tyre may also lead to the risk of the tyre being wrought off the rim, whereby the motorcycle is not drivable any more. For safety and competition reasons it might for some situations be necessary to wait with changing of tyres and to continue the driving despite a punctured tyre. It would therefore be desirable to have a device that enables loads on the tyre even if the tyre has been punctured.

EP 0 695 651 discloses a device for locking a tyre to a rim. It comprises a tubular member that is placed inside the tyre having a diameter such that it is in the vicinity of the beads. It is further arranged with a valve protruding through a hole in the rim, for inflating the tubular member. When this is done, the tubular member will press against the beads, which in turn press against the flanges of the rim.

The drawback with the device according to EP 0 695 651 is that the rim needs two holes for valves, one for the tubular member and the other for the tyre. Further, an airtight band is required, abutting the inner surface of the rim for preventing air from escaping through the rim. In all, the device is difficult to attach to a rim, to arrange the tubular member in the right position and to inflate both the tyre and the locking member.

Document DE 2806325 discloses a method according to the preamble of claim 1.

### BRIEF DESCRIPTION OF THE INVENTION

The aim of the present invention is to provide a method for locking a tyre to a rim in a convenient and safe way with few components.

This aim is obtained by the features of the independent patent claims. Preferable embodiments of the invention form the subject of the dependent claims.

According to a main aspect of the invention it is characterised by a method for locking a tyre to a wheel rim, comprising the steps of mounting a tubular tyre locking means on the wheel rim, which tubular locking member is arranged with a valve, which valve is pushed through a hole in the rim, mounting a tyre on the rim such that the tyre encloses the tyre locking means and a pressure chamber is obtained between the tyre locking means and the tyre, pressurizing said tyre locking means via said valve such that it expands, whereby the beads of the tyre are pressed against the flanges of the wheel rim, inserting a hollow needle through the tyre and into said pressure chamber, which hollow needle is connected to a pressurized air source, pressurising said pressure chamber to desired pressure, removing said hollow needle, and sealing the hole caused by said needle.

According to another aspect of the invention, it comprises the step of introducing a sealing liquid in said pressure chamber before the tyre is completely mounted on the wheel rim, whereby said sealing liquid flows into and seals the hole caused by said needle when said needle is removed.

According to a variant, the sealing of said hole comprises inserting and attaching a sealing plug.

According to another aspect of the invention, it is characterised by a tyre locking kit for performing the method according to the above method, comprising a tubular tyre locking means arranged with a valve and intended to be mounted on the wheel rim and when in an inflated state press the beads of a tyre against the flanges of a wheel rim, thereby locking the tyre against the rim, a hollow needle intended to penetrate the tyre, and arranged to be connected to a pressurized air source for inflating said tyre, and tyre hole sealing means.

According to a further aspect of the invention, the tyre hole sealing means comprises a container with sealing liquid intended for sealing holes in tyres.

According to a variant of the tyre locking kit, the tyre hole sealing means comprises a sealing plug intended to be inserted in holes in tyres.

According to another aspect of the invention, said tubular locking means comprises an annular lock member having a semi-circular cross-section, the side surfaces of which are intended to abut the beads of the tyre, and a tube comprising said valve, arranged to be positioned inside said annular lock member, which tube, when inflated, is arranged to expand generally in its transversal direction.

According to yet an aspect of the invention, said annular lock member further comprises annularly extending reinforcement means, capable of preventing expansion of said lock member in its longitudinal direction.

According to a further aspect of the invention, said annular lock member comprises annular ledges on the side surfaces, providing airtight seal between the beads of the tyre and the tyre locking means, when inflated.

The advantages with the present invention are several. The tyre locking means provide a very firm and positive locking of the beads of the tyre against the flanges of the rim. Because the tyre locking means comprises a tube with an air valve, the normal air valve hole of the rim can be used.

However, since the present invention utilizes a hollow needle, which penetrates the tyre, no further air valve for inflating the tyre is needed. Also the overall design of the tyre locking means provides device with less components and/or requires less modification of rims and/or tyres, which in turn simplifies the mounting and also means a lighter device that is of importance especially for motorcycles.

The sealing of the hole after the needle may be done by a sealing liquid poured inside the tyre or with a sealing plug that is inserted into the hole. The advantage with the sealing liquid is that it may provide a sealing layer on the whole inner surface of the tyre.

Preferably the lock member is designed such that it provides an airtight seal between the tyre locking means and the beads of the tyre and is further arranged with reinforcement means preventing expansion in its longitudinal direction and only expansion of the tyre locking means in its transversal direction.

These and other aspects of and advantages with the present invention will become apparent from the following detailed description and from the accompanying drawing.

### BRIEF DESCRIPTION OF THE DRAWINGS

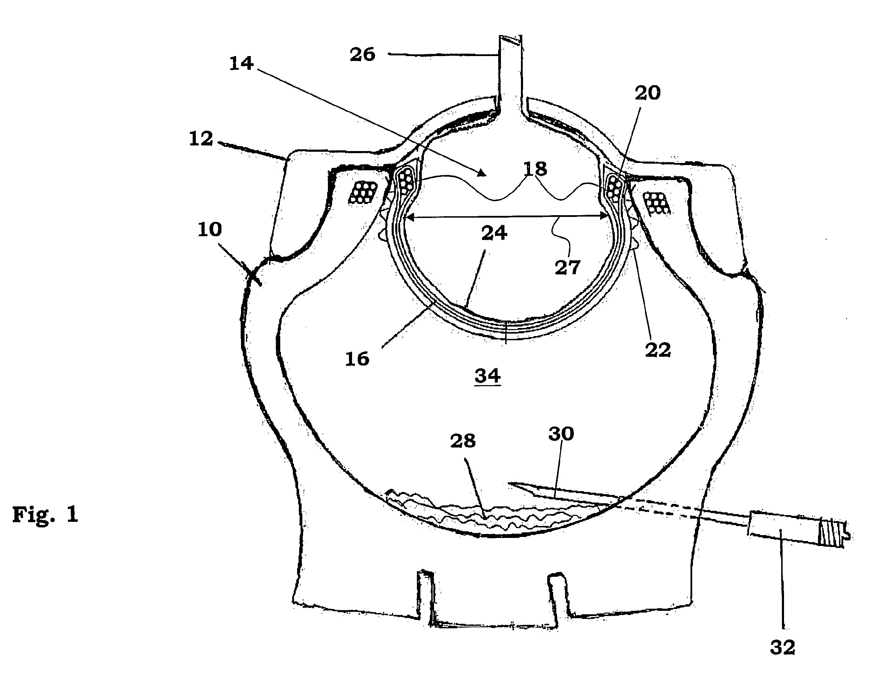

In the detailed description of the invention, reference will be made to the accompanying drawing, of which Fig. 1 is a cross-sectional view of a tyre and a rim and comprising the present invention.

### DETAILED DESCRIPTION OF THE INVENTION

Figure 1 is a cross-sectional view of a motorcycle tyre 10 mounted on a rim 12. A tyre locking means is denoted with 14. It comprises an annular lock member 16 having a semi-circular cross-section such that two bead-shaped sections 18 are formed. The bead-shaped sections are preferably provided with reinforcement means 20 such as steel wires, which prevent expansion in its longitudinal direction, as will be described below. The outer surfaces of the beads are arranged with annularly extending ridges or ledges 22, the function of which will be described below. Inside the annular lock member a tube 24 of an elastic material, such as rubber, is arranged. The tube is arranged with a valve 26 for inflating it, which valve extends through a hole in the rim.

The tyre locking device is intended to function as follows. The locking member 16 and the tube 24 are mounted as a unit, i.e. with the tube inside the locking member, on the rim 12. This is done in a conventional manner in that one of the beads of the locking member is brought into the bottom of the drop centre of rim and then the other bead is pushed over the edge of the rim flange. After this the tyre is mounted on the rim, also in a conventional manner. However, before the other bead of the tyre is pushed over the edge of the rim flange a sealing fluid 28 is poured into the interior of the tyre.

When the tyre is mounted on the rim, the tube of the tyre locking means is pressurised via the valve 26. This inflates the tube whereby it expands mainly in its transversal direction as is shown by arrow 27, which in turn causes the locking member to expand in its transversal direction. The reinforcement wires 20 prevent expansion in the longitudinal direction. The expansion in the transversal direction causes the tyre beads to be pressed against the rim flanges causing the tyre to be locked to the rim by friction. The ledges 22 are pressed against the inner surface of the beads, whereby an airtight connection is obtained between the tyre locking means and the tyre beads. The pressure in the tube of the tyre locking means should always exceed the intended pressure in the tyre.

The next step is to pressurize the tyre. This is obtained by utilizing a hollow needle 30 having a sharp front end and a valve 32 in the rear end. The needle is pushed through the material of the tyre so that the front end is positioned in a pressure chamber 34 formed by the interior of the tyre and the locking means. Then a suitable pressure source is attached to the valve of the needle and the tyre is inflated to the desired pressure. After this the needle is removed. The wheel is then rotated so that the hole after the needle is positioned downwards, whereby sealing fluid 28 flows into the hole and seals it. After a shorter drying period, the tyre is ready to be used. The wheel may be rotated such that the sealing liquid forms a sealing layer on the whole inner surface of the tyre.

As a variant to sealing liquid, a sealing plug may utilized. The sealing plug is preferably of the same material as the tyre and is introduced into the hole with a suitable insertion device. The sealing plug may either be glued in the hole or be of a self-vulcanizing material.

The invention has been described in connection with a motorcycle tyre but it is to be understood that it may be utilized on all types of vehicles where there is a risk for punctures and where there is a need to move the vehicle before the puncture is taken care of, without the risk of the tyre being wrought off the rim. Examples of vehicles are bicycles, mopeds, cars, trailers, busses, lorries, construction equipment, etc.

It is to be understood that the embodiments described above and shown in the drawings are to be regarded only as non-limiting examples of the present invention and that it may be modified in many ways within the scope of protection of the independent patent claims. For the sake of clarity, the wording longitudinal direction is to mean the annular direction of a ring-shaped member and the wording transversal direction is a direction 90 degree to the former.

## Claims

1. Method for locking a tyre (10) to a wheel rim (12), comprising the steps of:
- mounting a tubular tyre locking means (14) on the wheel rim, which tubular tyre locking means (14) is arranged with a valve (26), which valve (26) is pushed through a hole in the rim (12),
- mounting a tyre (10) on the rim (12) such that the tyre (10) encloses the tyre locking means (14) and a pressure chamber (34) is obtained between the tyre locking means and the tyre,
- pressurizing said tyre locking means (14) via said valve (26) such that it expands, whereby the beads of the tyre (10) are pressed against the flanges of the wheel rim (12), **characterised in** the further steps of:
- inserting a hollow needle (30) through the tyre (10) and into said pressure chamber (34), which hollow needle (30) is connected to a pressurized air source,
- pressurising said pressure chamber (34) to desired pressure,
- removing said hollow needle (30), and
- sealing the hole caused by said needle.

2. Method according to claim 1, comprising the step of introducing a sealing liquid (28) in said pressure chamber (34) before the tyre (10) is completely mounted on the wheel rim (12), whereby said sealing liquid (28) flows into and seals the hole caused by said needle (30) when said needle is removed.

3. Method according to claim 1, wherein the sealing of said hole comprises inserting and attaching a sealing plug.

4. Tyre locking kit for performing the method according to claim 1, comprising
a. a tubular tyre locking means (14) arranged with a valve (26) and intended to be mounted on the wheel rim (12) and when in an inflated state to press the beads of a tyre (10) against the flanges of a wheel rim (12), thereby locking the tyre against the rim,
b. a hollow needle (30) intended to penetrate the tyre (10), and arranged to be connected to a pressurized air source for inflating said tyre, and
c. a container with sealing liquid (28) intended for sealing holes in tyres.

5. Tyre locking kit according to claim 4, wherein said tubular locking means (14) comprises an annular lock member (16) having a semi-circular cross-section, the side surfaces of which are intended to abut the beads of the tyre, and a tube (24) comprising said valve, arranged to be positioned inside said annular lock member (16), which tube (24), when inflated, is arranged to expand generally in its transversal direction.

6. Tyre locking kit according to claim 5, wherein said annular lock member (16) further comprises annularly extending reinforcement means (20), capable of preventing expansion in the longitudinal direction of said lock member (16).

7. Tyre locking kit according to claim 5 or 6, wherein said annular lock member (16) comprises annular ledges (22) on the side surfaces, providing airtight seal between the beads of the tyre (10) and the tyre locking means (14), when inflated.

## Patentansprüche

1. Verfahren zum Sichern eines Reifens (10) an einer Radfelge (12), mit den Schritten:
- Montieren einer rohrförmigen Reifensicherungseinrichtung (14) auf der Radfelge, wobei die rohrförmige Reifensicherungseinrichtung (14) ein Ventil (26) aufweist, wobei das Ventil (26) durch ein Loch in der Felge (12) gedrückt wird,
- Montieren eines Reifens (10) auf der Felge (12) derart, dass der Reifen (10) die Reifensicherungseinrichtung (14) umschließt und eine Druckkammer (34) zwischen der Reifensicherungseinrichtung und dem Reifen erhalten wird,
- Unterdrucksetzen der Reifensicherungseinrichtung (14) über das Ventil (26) derart, dass sie sich ausdehnt, wodurch die Wülste des Reifens (10) gegen die Flansche der Radfelge (12) gedrückt werden, **gekennzeichnet durch** die weiteren Schritte:
- Einführen einer Hohlnadel (30) **durch** den Reifen (10) in die Druckkammer (34), wobei die Hohlnadel (30) mit einer Druckluftquelle verbunden ist,
- Unterdrucksetzen der Druckkammer (34) auf einen Solldruck,
- Entfernen der Hohlnadel (30), und
- Versiegeln des **durch** die Nadel verursachten Lochs.

2. Verfahren nach Anspruch 1, mit dem Schritt zum Einfüllen einer Versiegelungsflüssigkeit (28) in die Druckkammer (34), bevor der Reifen (10) vollständig auf der Radfelge (12) montiert ist, wobei die Versiegelungsflüssigkeit (28) in das Loch fließt und es versiegelt, das durch die Nadel (30) verursacht wird, wenn die Nadel entfernt wird.

3. Verfahren nach Anspruch 1, wobei das Versiegeln des Lochs das Einsetzen und Befestigen eines Verschlußpfropfens aufweist.

4. Reifensicherungs-Kit zum Ausführen des Verfahrens nach Anspruch 1, mit:
a) einer rohrförmigen Reifensicherungseinrichtung (14) mit einem Ventil (26), die dafür vorgesehen ist, auf der Radfelge (12) montiert zu werden und im aufgeblasenen Zustand die Wülste eines Reifens (10) gegen die Flansche einer Radfelge (12) zu drücken, um den Reifen gegen die Felge zu sichern,
b) einer Hohlnadel (30), die dafür vorgesehen ist, den Reifen (10) zu durchdringen, und dafür geeignet ist, mit einer Druckluftquelle zum Aufblasen des Reifens verbunden zu werden, und
c) einem Behälter mit einer Versiegelungsflüssigkeit (28), die dafür geeignet ist, Löcher in Reifen zu versiegeln.

5. Reifensicherungs-Kit nach Anspruch 4, wobei die rohrförmige Reifensicherungseinrichtung (14) ein ringförmiges Sicherungselement (16) mit einem halbkreisförmigen Querschnitt, dessen Seitenflächen dazu geeignet sind, an den Wülsten des Reifens anzuliegen, und einen Schlauch (24) mit dem Ventil aufweist, wobei der Schlauch (24) dazu geeignet ist, im Inneren des ringförmigen Sicherungselements (16) angeordnet zu werden, und derart konstruiert ist, dass er sich, wenn er aufgeblasen wird, im Wesentlichen in seiner Querrichtung ausdehnt.

6. Reifensicherungs-Kit nach Anspruch 5, wobei das ringförmige Sicherungselement (16) ferner eine sich ringförmig erstreckende Verstärkungseinrichtung (20) aufweist, die dazu geeignet ist, eine Ausdehnung des Sicherungselements (16) in der Längsrichtung zu verhindern.

7. Reifensicherungs-Kit nach Anspruch 5 oder 6, wobei das ringförmige Sicherungselement (16) ringförmige Stege (22) auf den Seitenflächen aufweist, die im aufgeblasenen Zustand eine luftdichte Abdichtung zwischen den Wülsten des Reifens (10) und der Reifensicherungseinrichtung (14) gewährleisten.

## Revendications

1. Procédé de blocage d'un pneu (10) sur une jante de roue (12), comprenant les étapes consistant à :
- monter des moyens tubulaires (14) de blocage d'un pneu sur la jante de roue, lesdits moyens tubulaires (14) de blocage d'un pneu étant pourvus d'une valve (26), et cette valve (26) étant poussée dans la jante de roue (12) au travers d'un orifice,
- monter un pneu (10) sur la jante de roue (12) de telle sorte que le pneu (10) entoure les moyens (14) de blocage du pneu et qu'une chambre de pression (34) soit obtenue entre les moyens de blocage du pneu et le pneu,
- mettre sous pression lesdits moyens (14) de blocage du pneu par l'intermédiaire de ladite valve (26) de sorte qu'ils s'étendent, les talons du pneu (10) étant pressés contre les flancs de la jante de roue (12), **caractérisé en ce que** le procédé comprend en outre les étapes suivantes consistant à :
- insérer une aiguille creuse (30) au travers du pneu (10) et dans ladite chambre de pression (34), ladite aiguille creuse (30) étant reliée à une source d'air comprimé,
- mettre sous pression ladite chambre de pression (34) jusqu'à une pression désirée,
- retirer ladite aiguille creuse (30), et
- boucher le trou créé par ladite aiguille.

2. Procédé selon la revendication 1, comprenant l'étape consistant à introduire un liquide d'étanchéité (28) dans ladite chambre de pression (34) avant que le pneu (10) ne soit complètement monté sur la jante de roue (12), ledit liquide d'étanchéité (28) se répandant à l'intérieur du trou créé par ladite aiguille (30) lorsque ladite aiguille est retirée et permettant de boucher ledit trou.

3. Procédé selon la revendication 1, dans lequel le bouchage dudit trou comprend l'étape consistant à insérer et fixer un bouchon étanche.

4. Kit de blocage d'un pneu pour la mise en oeuvre du procédé selon la revendication 1, comprenant
a. des moyens tubulaires (14) de blocage d'un pneu pourvus d'une valve (26), destinés à être montés sur la jante de roue (12) et, lors de leur mise sous pression, à presser les talons du pneu (10) contre les flancs de la jante de roue (12) de manière à bloquer le pneu contre la jante de roue,
b. une aiguille creuse (30) destinée à être insérée dans le pneu (10), et agencée pour être reliée à une source d'air comprimé afin de gonfler ledit pneu, et
c. un récipient contenant un liquide d'étanchéité (28) destiné à boucher des trous formés dans les pneus.

5. Kit de blocage d'un pneu selon la revendication 4, dans lequel lesdits moyens tubulaires de blocage (14) comprennent un organe annulaire de blocage (16) ayant une section semi-circulaire, dont les surfaces latérales sont destinées à venir en butée contre les talons du pneu, et un tube (24) comprenant ladite valve, agencé pour être positionné à l'intérieur dudit organe annulaire de blocage (16), ledit tube (24), lorsqu'il est gonflé, étant agencé pour s'étendre d'une manière générale selon sa direction transversale.

6. Kit de blocage d'un pneu selon la revendication 5, dans lequel ledit organe annulaire de blocage (16) comprend en outre des moyens de renfort (20) s'étendant de manière annulaire (20), capables d'empêcher l'expansion dans la direction longitudinale dudit organe de blocage (16).

7. Kit de blocage d'un pneu selon la revendication 5 ou la revendication 6, dans lequel ledit organe annulaire de blocage (16) comprend des rebords annulaires (22) au niveau des surfaces latérales, lesdits rebords formant un joint hermétique entre les talons du pneu (10) et les moyens de blocage du pneu (14) lorsqu'ils sont gonflés.
